(19) **Europäisches Patentamt / European Patent Office / Office européen des brevets**

(11) **EP 4 252 044 B1**

(12) **FASCICULE DE BREVET EUROPEEN**

(45) Date de publication et mention de la délivrance du brevet:
**22.10.2025 Bulletin 2025/43**

(21) Numéro de dépôt: **21815172.8**

(22) Date de dépôt: **16.11.2021**

(51) Classification Internationale des Brevets (IPC):
***G01V 20/00*** *(2024.01)*

(52) Classification Coopérative des Brevets (CPC):
**G01V 20/00**

(86) Numéro de dépôt international:
**PCT/EP2021/081888**

(87) Numéro de publication internationale:
**WO 2022/112065 (02.06.2022 Gazette 2022/22)**

(54) **PROCEDE POUR DETERMINER DES INCERTITUDES ASSOCIEES A UN MODELE DE BASSIN SEDIMENTAIRE**

VERFAHREN ZUR BESTIMMUNG VON UNSICHERHEITEN IM ZUSAMMENHANG MIT EINEM MODELL EINES SEDIMENTBECKENS

METHOD FOR DETERMINING UNCERTAINTIES ASSOCIATED WITH A MODEL OF A SEDIMENTARY BASIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2020 FR 2012260**

(43) Date de publication de la demande:
**04.10.2023 Bulletin 2023/40**

(73) Titulaire: **IFP Energies nouvelles**
**92500 Rueil-Malmaison (FR)**

(72) Inventeurs:
• **GERVAIS-COUPLET, Veronique**
**92852 RUEIL-MALMAISON CEDEX (FR)**
• **BOUQUET, Sarah**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**US-A1- 2015 153 476**

• **"Utilisation de méta-modèles multi-fidélité pour l'optimisation de la production des réservoirs", 24 October 2017, article THENON ARTHUR: "Utilisation de méta-modèles multi-fidélité pour l'optimisation de la production des réservoirs", pages: 1 - 154, XP055823854**
• **DUCROS MATHIEU ET AL: "Map-based uncertainty analysis for exploration using basin modeling and machine learning techniques applied to the Levant Basin petroleum systems, Eastern Mediterranean", MARINE AND PETROLEUM GEOLOGY, ELSEVIER, AMSTERDAM, NL, vol. 120, 3 July 2020 (2020-07-03), XP086243947, ISSN: 0264-8172, [retrieved on 20200703], DOI: 10.1016/ J.MARPETGEO.2020.104560**

# Description

## Domaine technique

La présente invention concerne le domaine de l'exploration et de l'exploitation des gisements pétroliers ou de sites de stockage géologique de gaz. La présente invention concerne également le domaine des énergies nouvelles telles que la géothermie ou le stockage d'énergie dans le sous-sol. De manière générale, la présente invention peut être utilisée dans tout domaine nécessitant une caractérisation de la géométrie, de la nature des couches sédimentaires composant le sous-sol, et optionnellement de la nature des hydrocarbures présents dans le sous-sol.

L'exploration pétrolière consiste à rechercher des gisements d'hydrocarbures au sein d'un bassin sédimentaire. La démarche générale de l'évaluation du potentiel pétrolier d'un bassin sédimentaire comporte des allers-retours entre une prédiction du potentiel pétrolier du bassin sédimentaire, réalisée à partir d'informations mesurées relatives au bassin étudié (analyse d'affleurements, campagnes sismiques, forages par exemple), et des forages d'exploration dans les différentes zones présentant le meilleur potentiel, afin de confirmer ou infirmer le potentiel prédit préalablement, et d'acquérir de nouvelles informations permettant de préciser les prédictions de potentiel pétrolier du bassin étudié.

L'exploitation pétrolière d'un gisement consiste, à partir des informations récoltées lors de la phase d'exploration pétrolière, à sélectionner les zones du gisement présentant le meilleur potentiel pétrolier, à définir des schémas d'exploitation pour ces zones (par exemple à l'aide d'une simulation de réservoir, afin de définir les nombre et positions des puits d'exploitation permettant une récupération d'hydrocarbures maximale), à forer des puits d'exploitation et, de façon générale, à mettre en place les infrastructures de production nécessaires au développement du gisement.

L'évaluation du potentiel pétrolier d'un bassin sédimentaire est le plus souvent mise en œuvre au moyen de logiciels exécutés sur ordinateur, permettant la synthèse des données disponibles et la simulation de l'histoire géologique du bassin étudié. Ces logiciels peuvent permettre la simulation à une, deux ou trois dimensions, des processus sédimentaires, tectoniques, thermiques, hydrodynamiques, de chimie organique et inorganique qui interviennent lors de la formation d'un bassin pétrolier.

En particulier, la simulation stratigraphique a pour objectif de simuler l'évolution d'un bassin sédimentaire au cours des temps géologiques afin de quantifier notamment la géométrie des couches sédimentaires, le type de sédiments déposés, la profondeur d'eau au moment du dépôt, etc. La simulation de bassin permet quant à elle de simuler, au cours des temps géologiques, la formation des hydrocarbures à partir notamment de la matière organique initialement enfouie avec les sédiments, et le transport de ces hydrocarbures depuis les roches dans lesquelles ils se sont formés jusqu'à celles où ils sont piégés. A l'issue d'une simulation stratigraphique ou d'une simulation de bassin, on obtient un modèle du bassin, sous la forme d'une représentation numérique telle qu'une grille ou un maillage, chaque maille comportant au moins une valeur d'une propriété relative au bassin (géométrie des couches sédimentaires, composition des sédiments, pression, température, teneur et nature en hydrocarbures, etc.). Les valeurs de ces propriétés sont ensuite analysées notamment pour évaluer le potentiel pétrolier du bassin étudié.

De manière générale, les modèles de bassin doivent a minima reproduire les mesures réalisées sur le bassin, comme les mesures acquises aux puits ou les données issues des acquisitions sismiques. Le résultat d'une simulation est toutefois directement fonction des paramètres d'entrée de la simulation (tels que la bathymétrie initiale, les coefficients de transport des sédiments ou les apports en sédiments pour la simulation stratigraphique, ou encore le type de matière organique, les propriétés pétrophysiques des roches, les propriétés physico-chimiques des fluides, les températures et les pressions pour la simulation de bassin). On procède généralement à une estimation de ces paramètres de simulation à partir de différentes mesures réalisées in situ, mais les données disponibles ne sont en général pas assez informatives pour caractériser les paramètres d'entrée de ces simulations de manière unique. Ainsi il peut arriver que des modèles différents reproduisent les mesures réalisées sur un bassin, tout en correspondant à un état différent du bassin à l'actuel. Il apparaît donc important de quantifier les incertitudes associées aux valeurs des propriétés du bassin issues d'une simulation afin de les intégrer dans le processus d'évaluation du potentiel pétrolier du bassin, et notamment dans l'évaluation du risque d'exploration.

Une façon de réaliser de telles études consiste à se placer dans le cadre probabiliste et à considérer les paramètres d'entrée des simulations numériques impliquées dans une modélisation de bassin comme des variables aléatoires ayant une loi de probabilité donnée (par exemple, uniforme dans un certain intervalle ou Gaussienne). Ces lois sont choisies par l'utilisateur selon son expertise et sa connaissance du bassin, et peuvent être issues par exemple du calage du modèle sur les données (mesures) disponibles. On peut ensuite chercher à estimer la distribution correspondante des propriétés d'intérêt. On peut pour cela utiliser des méthodes d'échantillonnage de type Monte Carlo : un grand ensemble de modèles est généré selon les lois des paramètres (ensemble de jeu de valeurs pour les paramètres d'entrée) et l'évolution de ces modèles au cours du temps est simulée. Cela fournit un échantillon de valeurs pour les propriétés simulées qui peut ensuite être analysé et utilisé pour estimer la distribution de probabilité d'un évènement et/ou d'une situation donnés sachant l'incertitude que l'on s'est donnée sur les paramètres d'entrée. Ces évènements sont caractérisés par un intervalle de valeurs cible pour une propriété donnée, ou par la présence conjointe de plusieurs propriétés dans des intervalles cible. Ce type d'analyse peut être réalisé sur des propriétés scalaires, qui représentent par exemple des caractéristiques régionales du bassin comme la moyenne d'une propriété, ou bien sur la distribution spatiale de propriétés dans un ensemble de mailles (bloc 3D, carte, section 2D ...). On peut par exemple estimer une carte de probabilité de présence d'un réservoir définie par la probabilité dans chaque colonne de mailles du bassin que l'épaisseur de sédiments déposée et la concentration en sable soient supérieures à un certain seuil. Cette carte peut ensuite être utilisée pour estimer un risque d'exploration. Il convient aussi de noter que des approches, également basées sur un échantillonnage des paramètres d'entrée et des propriétés du bassin associées, fournissent une estimation de l'impact de ces paramètres sur les propriétés simulées considérées (analyse de sensibilité).

Toutefois, de telles analyses nécessitent la réalisation d'un grand nombre de simulations (plusieurs milliers par exemple) pour obtenir des échantillons représentatifs, ce qui est difficilement envisageable dans le cadre d'une étude opérationnelle du fait des temps de simulation longs et des délais courts pour réaliser de telles études.

**Technique antérieure**

Les documents suivants seront cités au cours de la description :

1. Douarche, F., Da Veiga, S., Feraille, M., Enchéry, G., Touzani, S. and Barsalou, R. (2014) Sensitivity Analysis and Optimization of Surfactant-Polymer Flooding under Uncertainties: Oil & Gas Science and Technology - Rev. IFP Energies nouvelles, v. 69, no. 4, p. 603-617.

2. Gervais, V., Ducros, M., Granjeon, D. (2018) Probability maps of reservoir presence and sensitivity analysis in stratigraphic forward modeling. AAPG Bulletin, 102(4)

3. Ducros, M., Nader F. (2020) Map-based uncertainty analysis for exploration using basin modeling and machine learning techniques applied to the Levant Basin petroleum systems, Eastern Mediterranean. Marine and Petroleum Geology, 120.

4. Jin, R., Chen, W., Sudjianto, A. (2002), On sequential sampling for global metamodeling in engineering design. Proceedings of DETC'02, ASME 2002 Design Engineering Technical Conference and Computers and Information in Engineering Conference, Montreal, Canada, September 29-October 2, 2002.

5. Sacks, J., Welch, W.J., Mitchell, T.J., Wynn, H.P. (1989) Design and Analysis of Computer Experiments. Stat. Sci. 4(4), 409-423.

6. Le Gratiet, L., Cannamela, C. (2015). Cokriging-based sequential design strategies using fast cross-validation techniques for multi-fidelity computer codes. Technometrics, 57(3), pp. 418-427.

7. Picheny, V., Ginsbourger, D., Roustant, O., Haftka, R., Kim N-H (2010). Adaptive designs of experiments for accurate approximation of a target region. Journal of Mechanical Design, 132(7), pp. 071008-1 - 071008-9

8. Busby, D. (2009). Hierarchical adaptive experimental design for Gaussian process emulators. Reliability Engineering and System Safety 94, pp 1183-1193.

9. Granjeon, D. and P. Joseph (1999) Concepts and applications of a 3-D multiple lithology, diffusive model in stratigraphic modeling, in J. W. Harbaugh, W. L. Watney, E. C. Rankey, R. Slingerland, and R. H. Goldstein, eds, Numerical Experiments in Stratigraphy: recent advances in stratigraphic and sedimentologic computer simulations, SEPM Special Publication 62, p. 197-210

10. Scheichl R., Masson R., Wendebourg J. (2003), Decoupling and Block Preconditioning for Sedimentary Basin Simulations, Computational Geosciences 7(4), pp. 295-318.

11. Steckler, M.S. and Watts, A.B. (1978) Subsidence of the Atlantic Type Continental Margin off New York. Earth and Planetary Science Letters, 41, 1-13

12. Sobol', I. M. (1990) On sensitivity estimation for nonlinear mathematical models: Mathematical Modeling & Computational Experiment, vol. 1, no. 4, p. 407-414.

On connait le document « Arthur Thenon. Utilisation de méta-modèles multi-fidélité pour l'optimisation de la production des réservoirs. Sciences de la Terre. Université Pierre et Marie Curie - Paris VI, 2017 » qui concerne l'utilisation de méta-modèles multi-fidélité pour l'optimisation de la production des réservoirs.
Pour pallier ce problème, il est possible de s'appuyer sur des méta-modèles qui approchent la relation entre les paramètres d'entrée du modèle et les sorties d'intérêt scalaires. On parle aussi de surfaces de réponse ou de modèles analytiques approchés. Chacun de ces méta-modèles est construit à partir d'un ensemble de valeurs de la propriété recherchée - simulateur lors des analyses de risque ou de sensibilité. Dans ce cas, les seules simulations à réaliser sont celles permettant la construction de l'ensemble d'apprentissage.

Différentes techniques existent pour construire de tels méta-modèles, comme la régression polynômiale, les processus Gaussiens ou encore les réseaux de neurones. Dans certains cas, les sorties d'intérêt sont dites fonctionnelles car dépendant par exemple du temps ou de la position dans le bassin. Il peut s'agir par exemple de la distribution de l'épaisseur de sédiments déposés dans chaque colonne de la grille, ou encore de la distribution de la température dans le bassin. Pour ce type de sorties, l'approche par méta-modèles peut être appliquée à chaque temps ou localisation d'intérêt. Une façon de réduire le nombre de variables à prédire, et donc les temps de calcul, consiste à introduire des techniques de réduction de dimension dans le processus (cf. le document [1] par exemple). Plus précisément, une décomposition en base réduite (de type ACP par exemple) est appliquée à l'ensemble des valeurs simulées pour les modèles du plan d'expériences dans la zone d'intérêt (cartes, blocs, sections). La méta-modélisation est ensuite appliquée non pas aux sorties simulées directement mais aux poids associés à chaque vecteur de la base réduite. Les sorties de la simulation sont ensuite estimées par combinaison linéaire de la base réduite avec les valeurs prédites pour les poids associés.

L'utilisation de méta-modèles pour la réalisation d'analyses de risque et d'analyses de sensibilité est une technique largement répandue dans de nombreuses applications. En modélisation du sous-sol à l'échelle du bassin, on peut citer notamment les travaux présentés dans les documents [2,3]. Le nombre limité de simulations à réaliser rend accessible ce type d'analyses dans le cadre d'études opérationnelles.

Toutefois, la principale difficulté réside dans le choix de l'ensemble d'apprentissage. Dans l'idéal, on souhaite générer un plan d'expériences le plus petit possible et conduisant à des estimations satisfaisantes en termes de précision. Cependant, il est difficile de connaître à l'avance le nombre de simulations nécessaires pour obtenir de tels estimateurs, ou la valeur adéquate des paramètres de simulation dans le plan d'expériences. Cela va dépendre notamment du nombre de paramètres incertains et de la complexité de la relation entre ces paramètres et la réponse. Afin d'optimiser le processus de construction de l'ensemble d'apprentissage, différentes méthodes ont été proposées, dans le domaine de l'ingénierie en général mais pas spécifiquement dans le domaine de la simulation de bassin ou de la simulation stratigraphique, pour compléter séquentiellement un plan d'expériences par de nouvelles simulations selon un critère donné. Certaines n'utilisent que la position des points déjà simulés dans l'espace des paramètres pour en proposer de nouveaux. On parle de méthodes sans adaptation. On peut citer par exemple le critère maximin (cf. le document [4]) qui vise à couvrir au mieux l'espace des paramètres selon des critères géométriques.

D'autres approches, dites avec adaptation, utilisent à la fois l'échantillon déjà simulé et les informations fournies par le méta-modèle courant pour choisir les nouveaux points. Le critère utilisé dépend ensuite de l'objectif de l'étude. Pour les analyses de risque et les analyses de sensibilité, on cherche à identifier des estimateurs prédictifs dans tout l'espace des paramètres incertains. A chaque itération, un ou plusieurs nouveaux points complémentaires sont proposés, qui peuvent ensuite être simulés de façon simultanée, sur un cluster (pouvant être traduit par « groupement ») de calcul par exemple.

Toutefois, ces méthodes, du domaine de l'ingénierie en général, ne s'appliquent qu'à un unique méta-modèle, approchant une unique sortie scalaire, dont elles vont chercher à améliorer la qualité grâce au nouveau point choisi. Elles peuvent donc directement s'appliquer pour estimer une quantité physique, par exemple une propriété d'intérêt dans une maille donnée. Si l'on souhaite prédire cette propriété dans un ensemble de mailles sans passer par une décomposition en base réduite (sortie fonctionnelle), les méthodes adaptatives peuvent être appliquées dans chaque maille. Toutefois, si beaucoup de mailles sont considérées, cela va conduire à ajouter au plan d'expériences autant de simulations que de mailles, ce qui peut ne pas être optimal en termes de temps de calcul et de mémoire informatique utilisée.

La présente invention permet de pallier ces inconvénients. La présente invention concerne un procédé automatique et efficace de quantification des incertitudes pour des sorties spatiales en modélisation de bassin au sens large (simulation stratigraphique et simulation de bassin). La présente invention repose sur le couplage des méthodes de planification séquentielle avec adaptation au traitement des sorties fonctionnelles par décomposition en base réduite. Elle permet à la fois de limiter le nombre de méta-modèles à calculer, et donc les temps de calcul et la mémoire informatique, et de compléter à chaque itération le plan d'expériences par de nouveaux points visant à améliorer globalement l'estimation de la propriété d'intérêt dans toutes les mailles considérées. Par ailleurs, l'ensemble d'apprentissage est construit en temps réel, jusqu'à atteindre des critères d'arrêt pertinents, notamment représentatifs de la qualité des estimations des propriétés spatiales d'intérêt.

**Résumé de l'invention**

La présente invention concerne un procédé pour déterminer des incertitudes relatives à au moins une propriété physique d'un bassin sédimentaire, au moyen d'une simulation numérique exécutée à partir de paramètres de simulation, ladite simulation numérique étant une simulation stratigraphique ou une simulation de bassin exécutée sur ordinateur, ladite propriété physique du bassin étant choisie parmi l'épaisseur d'une unité stratigraphique, la concentration en sable, la concentration en argile dans une unité stratigraphique, la température, la pression, la porosité, la masse volumique, la saturation, ou la concentration de la roche en matière organique, ladite simulation stratigraphique simulant l'évolution d'un bassin sédimentaire au cours des temps géologiques afin de quantifier notamment la géométrie des couches sédimentaires, le type de sédiments déposés, la profondeur d'eau au moment du dépôt, et ladite simulation de bassin simulant au cours des temps géologiques, la formation des hydrocarbures à partir notamment de la matière organique initialement enfouie avec les sédiments, et le transport de ces hydrocarbures depuis les roches dans lesquelles ils se sont formés jusqu'à celles où ils sont piégés.

Le procédé selon l'invention est caractérisé en ce qu'on réalise au moins les étapes suivantes :

A) On réalise des mesures de grandeurs physiques relatives audit bassin au moyen de capteurs, et on détermine au moins des valeurs desdits paramètres de simulation, lesdits paramètres de simulation étant choisis parmi la bathymétrie initiale, les apports en sédiments, leur transport pour chaque pas de temps, des propriétés pétrophysiques associées au bassin étudié;

B) On sélectionne des paramètres de simulation incertains, et on définit une pluralité de combinaisons des valeurs possibles desdits paramètres de simulation incertains ;

C) On détermine une pluralité de représentations maillées dudit bassin au moyen de ladite simulation numérique, chacune desdites représentations maillées étant obtenues pour une desdites combinaisons de ladite pluralité de combinaisons des valeurs possibles desdits paramètres incertains, chacune des mailles d'une desdites représentations maillées comprenant au moins une valeur permettant de déterminer ladite propriété ;

et en ce que, pour au moins une desdites propriétés physiques dudit bassin sédimentaire, on réalise au moins les étapes suivantes :

D) Pour chacune desdites représentations maillées, on détermine une réalisation d'une distribution spatiale de ladite propriété, on applique une analyse en composantes principales à la pluralité de réalisations de ladite distribution spatiale de ladite propriété, on sélectionne lesdites composantes dont la somme des valeurs propres associées est supérieure à un seuil prédéfini, et on détermine un modèle analytique approché de ladite distribution spatiale de ladite propriété en construisant un modèle analytique approché pour chacune desdites composantes sélectionnées ;

E) Tant qu'un critère d'arrêt n'est pas satisfait, on améliore la précision dudit modèle analytique approché de ladite distribution spatiale de ladite propriété de manière itérative en déterminant, à chaque itération, au moins une combinaison supplémentaire de ladite pluralité de combinaisons des valeurs possibles desdits paramètres incertains au moyen d'une méthode de planification séquentielle avec adaptation, ladite méthode de planification séquentielle avec adaptation étant appliquée auxdits modèles analytiques approchés desdites composantes sélectionnées, en considérant les composantes dans l'ordre décroissant de leurs valeurs propres et jusqu'à atteindre une valeur d'un indicateur de précision relatif à au moins ladite composante considérée à l'itération courante, et en répétant les étapes C) et D) ;

et en ce que, à partir dudit modèle analytique approché amélioré de ladite distribution spatiale de ladite au moins une propriété physique amélioré, on détermine lesdites incertitudes relatives à au moins ladite distribution spatiale de ladite propriété dudit modèle de bassin sédimentaire.

Selon une mise en œuvre de l'invention, ledit au moins un critère d'arrêt peut être fonction d'au moins un indicateur de précision sur lesdits modèles analytiques approchés desdites composantes.

Selon une mise en œuvre de l'invention, on peut déterminer un modèle analytique approché au moyen d'une régression par processus Gaussien.

Selon une mise en œuvre de l'invention, ladite méthode de planification séquentielle avec adaptation peut être choisie parmi la liste suivante : une méthode d'estimation de la variance de krigeage maximale, une méthode d'estimation de la variance de krigeage maximale pondérée par l'erreur de validation croisée, une méthode par intégration de la variance de krigeage, ou des plans d'expériences hiérarchiques.

Selon une mise en œuvre de l'invention, dans le cas d'une pluralité de propriétés physiques dudit bassin, on peut appliquer les étapes C) à E) pour chacune desdites propriétés physiques dudit bassin.

L'invention concerne en outre un produit programme d'ordinateur téléchargeable depuis un réseau de communication et/ou enregistré sur un support lisible par ordinateur et/ou exécutable par un processeur, comprenant des instructions de code de programme pour la mise en œuvre du procédé tel que décrit ci-dessus, lorsque ledit programme est exécuté sur un ordinateur.

L'invention concerne également un procédé pour exploiter des hydrocarbures présents dans un bassin sédimentaire, ledit procédé comprenant au moins la mise en œuvre du procédé pour déterminer des incertitudes relatives à au moins une propriété physique d'un bassin sédimentaire tel que décrit ci-dessus, et dans lequel, à partir au moins dudit modèle analytique approché amélioré et/ou desdites incertitudes relatives à au moins ladite propriété physique, on détermine un schéma d'exploitation dudit bassin comprenant au moins une implantation d'au moins un puits injecteur et/ou d'au moins un puits producteur, et on exploite lesdits hydrocarbures dudit bassin au moins en forant lesdits puits de ladite implantation et en les équipant d'infrastructures d'exploitation.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre l'évolution, en fonction du nombre de simulations, d'un premier indicateur de précision pour quatre composantes d'un modèle analytique approché d'une distribution spatiale d'intérêt.

La figure 2 illustre l'évolution, en fonction du nombre de simulations, d'un deuxième indicateur de précision d'un modèle analytique approché d'une distribution spatiale d'intérêt.

La figure 3 illustre la distribution des valeurs du premier indicateur de précision d'un modèle analytique approché d'une distribution spatiale d'intérêt dans chaque maille de la distribution spatiale d'intérêt.

**Description des modes de réalisation**

Selon un premier aspect, l'invention concerne un procédé pour déterminer des incertitudes relatives à au moins une propriété physique relative à un bassin sédimentaire, au moyen d'une simulation numérique exécutée à partir de paramètres de simulation. La simulation numérique selon l'invention peut être une simulation stratigraphique ou une simulation de bassin. Les simulations numériques selon l'invention sont plus amplement décrites en section 3) ci-dessous. Le procédé selon le premier aspect de l'invention comprend au moins les étapes 1 à 6 décrites ci-après.

Selon un deuxième aspect, l'invention concerne un procédé pour exploiter des hydrocarbures présents dans un bassin sédimentaire, au moyen des incertitudes relatives à au moins la propriété physique du bassin. Le procédé selon le deuxième aspect de l'invention comprend en outre au moins l'étape 7 décrite ci-après.

Les étapes des procédés selon les premier et deuxième aspects sont décrites ci-dessous dans le cas non limitatif d'une unique propriété physique d'intérêt. Dans le cas d'un ensemble de propriétés physiques d'intérêt, on peut, de manière non limitative, répéter séquentiellement les étapes 4 et 5 pour chaque propriété physique d'intérêt.

Par propriété physique du bassin, on entend par exemple l'épaisseur d'une unité stratigraphique, la concentration en sable, la concentration en argile dans une unité stratigraphique, la température, la pression, la porosité, la masse volumique, la saturation, ou encore le TOC (ou concentration de la roche en matière organique).

**1) Mesures de grandeurs physiques relatives au bassin**

Au cours de cette étape, on réalise des mesures de grandeurs physiques relatives au bassin sédimentaire considéré au moyen de capteurs, et on en déduit au moins des valeurs des paramètres de la simulation numérique considérée.

Selon une mise en œuvre de l'invention, les mesures de grandeurs physiques comprennent au moins des mesures diagraphiques et des mesures sismiques. Avantageusement, les mesures de grandeurs physiques peuvent aussi comprendre des mesures réalisées sur des affleurements, des analyses pétrophysiques et/ou géochimiques de carottes prélevées in situ.

Par mesures diagraphiques, on entend des mesures réalisées dans au moins un puits foré dans un bassin, au moyen d'un dispositif ou sonde diagraphique se déplaçant le long du puits pour mesurer une grandeur physique relative à la formation géologique proche du puits. Les mesures diagraphiques permettent d'estimer par exemple le contenu en eau et en hydrocarbures à chaque pas de mesure dans le puits, la lithologie dominante (ou faciès lithologique) et notamment le contenu en sable et/ou en argile des roches traversées, mais également le pendage et l'épaisseur des couches. Selon une mise en œuvre de l'invention, les grandeurs physiques mesurées peuvent comprendre la résistivité électrique, la radioactivité gamma naturelle, la polarisation spontanée. La mesure diagraphique est une mesure locale, le long du puits et d'extension latérale limitée.

Par mesures sismiques, on entend des mesures réalisées au moyen d'un dispositif d'acquisition de mesures sismiques, comprenant de manière classique au moins une source sismique (par exemple un canon à eau en sismique marine, ou un camion vibrateur en sismique terrestre) pour générer des ondes sismiques dans le bassin et une pluralité de récepteurs d'ondes sismiques (tels que des accéléromètres, des hydrophones) placés de manière à enregistrer au moins des ondes sismiques s'étant réfléchies sur des contrastes d'impédance du bassin (tels que des surfaces d'érosion, des limites d'unités stratigraphiques). De manière classique le dispositif d'acquisition sismique est mobile de manière à couvrir une large zone (2D ou 3D) à la surface du bassin.

De manière non limitative, les capteurs peuvent en outre consister en des préleveurs et analyseurs de fluide, des préleveurs et analyseurs de carottes ou de tout échantillon prélevé.

A partir de ces mesures, on peut notamment estimer la géométrie des unités stratigraphiques du bassin à l'actuel, qualifier les différents dépôts sédimentaires inorganiques (composition minéralogique ou au moins du type de dépôt, épaisseurs, âges, conditions de dépôt etc.), estimer des propriétés pétrophysiques telles que le faciès (lithologie), la porosité, la perméabilité, la saturation en fluides ou encore la teneur en matière organique en des points de mesure du bassin. On peut en outre en déduire les événements géologiques subis par le bassin au cours des temps géologiques (érosion, subsidence, eustatisme etc.). Ces informations déduites des mesures sont toutefois incertaines, car elles résultent de mesures, éventuellement prétraitées (notamment les mesures sismiques), ou d'une interprétation des mesures (par exemple l'estimation de la géométrie des unités stratigraphiques sur la base des mesures sismiques).

Selon une mise en œuvre de l'invention, à partir des mesures ainsi réalisées, on peut définir les paramètres d'entrée d'une simulation stratigraphique, tels que la bathymétrie initiale, les apports en sédiments (inorganiques, tels que la production des différents carbonates, et éventuellement organiques), leur transport pour chaque pas de temps. Selon une mise en œuvre de l'invention, la bathymétrie initiale peut être estimée par une interprétation en environnements de dépôt (fluvial, littoral, marin profond...) des mesures de puits et/ou des mesures sismiques. Selon une mise en œuvre de l'invention, les coefficients de transport peuvent être définis à partir des environnements sédimentaires modernes (c'est-à-dire observés au temps actuel), en comparant par exemple le flux de sédiment transporté par les fleuves au débit de ces fleuves. Selon une mise en œuvre de l'invention, les apports de sédiments peuvent être évalués à partir du volume de sédiments déposés dans le bassin.

A partir de ces mesures, on peut en outre définir les paramètres d'entrée d'une simulation de bassin, en particulier des propriétés pétrophysiques associées au bassin étudié, tels que le faciès (lithologie), la porosité, la perméabilité, ou encore la teneur en matière organique en des points de mesure du bassin. On peut aussi en déduire des informations sur les propriétés des fluides présents dans le bassin, telles que des valeurs de saturation en les différents fluides présents dans le bassin. Egalement, on peut mesurer des températures en différents points du bassin (températures de fond de puit notamment).

Dans le cas d'une simulation de bassin, ces mesures peuvent en outre être utilisées pour construire une représentation maillée représentative du bassin à l'état actuel. Plus précisément, la construction d'une représentation maillée d'un bassin consiste à discrétiser en trois dimensions l'architecture du bassin, à attribuer des propriétés à chacune des mailles de cette représentation maillée. Pour ce faire, on exploite notamment des mesures de grandeurs physiques réalisées en différents points du bassin décrites ci-dessus, que l'on extrapole et/ou interpole, en les différentes mailles de la représentation maillée, suivant des hypothèses plus ou moins restrictives. Le plus souvent la discrétisation spatiale d'un bassin sédimentaire est organisée en couches de mailles, représentant chacune les différentes couches géologiques du bassin étudié.

A l'issue de cette étape, on obtient donc, à partir des mesures de grandeurs physiques réalisées sur le bassin, au moins des valeurs de paramètres d'entrée de la simulation numérique considérée.

## 2) Définition d'une pluralité de combinaisons de valeurs de paramètres de simulation incertains

Au cours de cette étape, on sélectionne des paramètres de simulation incertains et on définit une pluralité de combinaisons des valeurs possibles desdits paramètres de simulation incertains.

Par paramètre de simulation incertain, on entend un paramètre de simulation dont la valeur pour le bassin considéré n'est pas connue avec certitude. Autrement dit, il s'agit de paramètres de simulation pour lesquels les incertitudes sont supérieures à un seuil prédéfini, par exemple supérieures à 10%. Avantageusement, parmi l'ensemble des paramètres incertains, on choisit ceux dont la variation dans l'intervalle de leurs valeurs plausibles entraîne une variation importante des résultats de simulation, notamment des valeurs de la propriété physique d'intérêt. Autrement dit, on va sélectionner parmi l'ensemble des paramètres incertains, ceux pour lesquels il apparaît important d'étudier l'impact sur les valeurs de la propriété physique d'intérêt.

De manière générale, l'homme du métier a parfaitement connaissance de la manière d'identifier des paramètres de simulation incertains parmi l'ensemble des paramètres d'une simulation.

Selon une mise en œuvre de l'invention, on peut déterminer des incertitudes sur les paramètres de simulation à partir des incertitudes sur les mesures de grandeurs physiques relatives audit bassin décrites à l'étape précédente.

Selon une autre mise en œuvre de l'invention, les incertitudes sur les paramètres de simulation peut être estimée à partir d'informations bibliographiques, relatives au bassin étudié ou sur des analogues.

Selon une mise en œuvre de l'invention, afin d'identifier les paramètres incertains ayant un fort impact sur la simulation, on peut réaliser préalablement quelques (par exemple 3 à 5 par paramètre incertain) simulations numériques pour différentes valeurs prédéfinies de paramètres de simulation, et on réalise une première analyse de sensibilité en fonction du résultat de ces simulations. Par exemple, si on ne fait varier qu'un seul paramètre et que l'on obtient un résultat de simulation équivalent quelle que soit la valeur de ce paramètre, on peut faire l'hypothèse qu'il n'est pas nécessaire de considérer ce paramètre dans l'analyse. A l'inverse, si des valeurs différentes du paramètre donnent un résultat de simulation très différent, alors il peut être important de quantifier les incertitudes sur la propriété d'intérêt associées à ce paramètre.

Selon une mise en œuvre de l'invention, on peut définir une pluralité de combinaisons des valeurs possibles desdits paramètres de simulation incertains à partir de lois de distribution de probabilité associées auxdits paramètres incertains. La loi de probabilité peut par exemple être uniforme entre une valeur minimale et une valeur maximale.

Avantageusement, on peut définir une pluralité de combinaisons des valeurs possibles des paramètres de simulation incertains au moyen d'une méthode d'échantillonnage. Ces techniques d'échantillonnage sont aussi connues sous le terme de plan d'expériences. Selon une mise en œuvre de l'invention, on peut utiliser de manière non limitative les plans factoriels, les plans composites, les plans de distance maximin, etc. Avantageusement, on peut utiliser la méthode d'échantillonnage par Hypercube Latin, telle que décrite dans le document [8].

Dans la suite, on suppose que l'on a généré un plan d'expériences noté $D = (\theta_j)_{j=1..n}$, comprenant un nombre $n$ de combinaisons de valeurs possibles des paramètres incertains.

### 3) Détermination d'une pluralité de représentations maillées du bassin

Au cours de cette étape, on détermine une pluralité de représentations maillées représentatives du bassin au moyen de la simulation numérique considérée, chacune des représentations maillées étant obtenue pour une des combinaisons de la pluralité de combinaisons des valeurs possibles desdits paramètres incertains. Selon une mise en œuvre de l'invention, la représentation maillée dont il est question ici est une représentation maillée au temps actuel, mais le procédé selon l'invention peut être appliqué à une représentation maillée déterminée pour tout temps géologique.

Selon une mise en œuvre de l'invention, la simulation numérique est un simulateur stratigraphique. Il s'agit d'un logiciel exécuté sur ordinateur visant à reconstituer les processus sédimentaires ayant affecté le bassin depuis un temps géologique antérieur jusqu'au temps actuel. Ainsi, une simulation stratigraphique numérique est de manière générale implémentée de manière discrète dans le temps, c'est-à-dire qu'une simulation stratigraphique simule l'état stratigraphique du bassin pour une succession de pas de temps. Un pas de temps d'un simulateur stratigraphique correspond à une durée géologique au cours de laquelle des dépôts ou des érosions sédimentaires ont modifié le bassin. Les propriétés (dont la porosité et la minéralogie) de ces dépôts peuvent être relativement hétérogènes au niveau du bassin. La simulation de l'histoire du remplissage d'un bassin sédimentaire est réalisée à partir des paramètres d'entrée représentatifs de l'histoire sédimentaire du bassin étudié. Selon une mise en œuvre de l'invention, les paramètres d'entrée d'une simulation stratigraphique peuvent être au moins (1) l'espace disponible pour la sédimentation, lié à des mouvements tectoniques et/ou eustatiques et à la compaction mécanique des sédiments (ou tassement des sédiments sous l'effet du poids des couches sus-jacentes), (2) l'apport en sédiments dans le bassin, soit par les frontières, soit par l'intermédiaire d'une production ou d'une précipitation in situ, (3) le transport de ces sédiments (capacité de transport estimée à partir des caractéristiques du sédiment comme la taille des grains ou encore leur densité, du flux d'eau s'écoulant à la surface du sol et de la pente locale du bassin) dans l'espace disponible créé. Le système d'équations décrivant ces processus peut par exemple être résolu par une discrétisation spatiale en volumes finis, et un schéma explicite en volumes finis. Selon une mise en œuvre de l'invention, le résultat d'une simulation stratigraphique pour un pas de temps peut correspondre à une représentation maillée pour laquelle chaque maille est au moins remplie par les informations suivantes : la teneur en sédiments (sable, argile, carbonates, matière organique...), et les environnements de dépôt (en particulier la bathymétrie au moment du dépôt). De manière très classique, la représentation maillée issue d'une simulation stratigraphique est aussi renseignée avec des propriétés caractéristiques de l'environnement de dépôt (profondeur de l'eau, élévation du bassin ...). On peut trouver une description d'un tel simulateur stratigraphique dans le document [9]. Un exemple d'un tel simulateur stratigraphique est le logiciel DIONISOS FLOW® (IFP Energies nouvelles, France).

Selon une mise en œuvre de l'invention, la simulation numérique peut être une simulation de bassin. De manière classique, un simulateur de bassin permet de reconstituer des processus géologiques et/ou géochimiques ayant affecté le bassin depuis un temps géologique t jusqu'au temps actuel. De manière classique, la période sur laquelle on reconstitue l'histoire de ce bassin est discrétisée en événements géologiques, aussi appelés états. Ainsi, deux états sont séparés par un événement géologique (correspondant par exemple à un dépôt sédimentaire particulier et pouvant s'étaler entre une centaine d'années et quelques millions d'années). Un simulateur de bassin repose sur une représentation maillée du bassin, aussi appelée modèle de bassin, et le simulateur de bassin permet de déterminer un tel modèle pour chaque état. Ainsi, un simulateur de bassin permet de calculer des propriétés physiques relatives au bassin étudié en chaque maille de la représentation maillée associée à chaque état. Parmi les propriétés physiques estimées par un simulateur de bassin, on trouve généralement la température, la pression, la porosité et la masse volumique de la roche contenue dans la maille considérée, la saturation, et le TOC (ou concentration de la roche en matière organique). De manière classique, un simulateur de bassin permet, en outre, de calculer la quantité et la composition des hydrocarbures d'origine thermogénique, au moyen d'un modèle cinétique qui est alimenté par des paramètres cinétiques. Ainsi, la simulation de bassin consiste en la résolution d'un système d'équations différentielles décrivant l'évolution au cours du temps des propriétés physiques étudiées. Pour ce faire, on peut par exemple utiliser une discrétisation par la méthode des volumes finis, comme décrit par exemple dans le document [10]. Pour chaque état, il est nécessaire de résoudre les équations par petits incréments de temps (i.e. avec un petit pas de temps *dt*) jusqu'à l'état suivant. Conformément au principe des méthodes de volumes finis centrés sur les mailles, les inconnues sont discrétisées par une valeur constante par maille et les équations de conservation (masse ou chaleur) sont intégrées en espace sur chaque maille et en temps entre deux pas de temps successifs. Les équations discrètes expriment alors que la quantité conservée dans une maille à un pas de temps donné est égale à la quantité contenue dans la maille au pas de temps précédent, augmentée des flux de quantités entrées dans la maille et réduite des flux de quantités sorties de la maille par ses faces, plus les apports extérieurs. Un exemple d'un tel simulateur de bassin est le logiciel TemisFlow™ (IFP Énergies nouvelles, France).

Toujours selon une mise en œuvre de l'invention selon laquelle ladite simulation numérique est une simulation de bassin, on peut en outre préalablement reconstruire les architectures passées du bassin pour différents états du bassin. Pour ce faire, on déforme la représentation maillée construite à l'étape précédente, qui représente le bassin au temps actuel, afin de représenter l'évolution anti-chronologique de l'architecture du sous-sol au cours des temps géologiques, et ce pour les différents états du bassin. A l'issue de cette étape, on dispose d'une représentation maillée pour chaque état. Selon un premier mode de réalisation, la reconstruction structurale peut être particulièrement simple si elle se base sur l'hypothèse que sa déformation résulte uniquement d'une combinaison de mouvements verticaux par compaction du sédiment ou par surrection ou affaissement de son socle. Cette technique, connue sous le terme de "back stripping" (ou "décompaction progressive du bassin" en français) est décrite par exemple dans le document [11]. Selon un autre mode de réalisation, dans le cas de bassins dont l'histoire tectonique est complexe, notamment dans le cas de bassins présentant des failles, il convient d'utiliser des techniques aux hypothèses moins restrictives, telles que la restauration structurale. Une telle restauration structurale est décrite par exemple dans le document FR 2 930 350 A1 (US 2009/0265152 A1). La restauration structurale consiste à calculer les déformations successives que le bassin a subies, en intégrant les déformations dues à la compaction et celles qui résultent des forces tectoniques.

Ainsi, à l'issue de cette étape, quelle que soit la simulation numérique utilisée, on obtient au moins une représentation maillée du bassin (notamment à l'actuel) pour chacune des combinaisons des valeurs possibles des paramètres incertains. Chacune des mailles de ces représentations maillées contient au moins une valeur de la propriété physique d'intérêt ou des valeurs de propriétés permettant la détermination d'une valeur de la propriété d'intérêt (par exemple par combinaison linéaire de plusieurs valeurs de propriétés dans la maille considéré).

## 4) Construction d'un modèle analytique approché d'une distribution spatiale de la propriété physique

Au cours de cette étape, on détermine une réalisation d'une distribution spatiale de la propriété physique d'intérêt pour chacune des représentations maillées de la pluralité de représentations maillées, on applique une analyse en composantes principales à la pluralité de réalisations de la distribution spatiale de la propriété physique, et on sélectionne les composantes issues de l'analyse en composantes principales dont la somme des valeurs propres associées est supérieure à un seuil prédéfini. Puis, on détermine un modèle analytique approché relatif à la distribution spatiale de la propriété en construisant un modèle analytique approché pour chacune des composantes sélectionnées.

Selon une mise en œuvre de l'invention, la réalisation d'une distribution spatiale de la propriété physique d'intérêt d'une représentation maillée peut correspondre à la distribution des valeurs de la propriété physique d'intérêt pour au moins un sous-ensemble des mailles de la représentation maillée, comme par exemple une colonne de mailles dans la représentation maillée, un groupe de mailles de la représentation maillée correspondant à une même couche géologique, ou tout autre groupe de mailles. Il est bien clair que cette étape peut être aussi appliquée à l'ensemble des mailles de la représentation maillée, c'est-à-dire que l'on considère la distribution des valeurs de la propriété physique d'intérêt pour l'ensemble des mailles de la représentation maillée.

Selon une autre mise en œuvre de l'invention, la réalisation d'une distribution spatiale de la propriété physique d'intérêt d'une représentation maillée peut être déterminée à partir des valeurs d'une ou plusieurs propriétés physiques de la représentation maillée, comme par exemple à partir d'une combinaison linéaire d'une ou plusieurs propriétés physiques.

Par la suite, on note $y(\boldsymbol{u}, \theta_j)$ la distribution spatiale de la propriété physique $y$ pour la combinaison de paramètres incertains $\theta_j$, avec j variant de 1 à n, et où $u$ est la position de la maille dans le bassin. On note également $\boldsymbol{y}(\boldsymbol{D}) = (y(\boldsymbol{u}, \theta_j))_{j=1..n}$ l'ensemble des distributions spatiales de la propriété physique $y$ d'intérêt pour le plan d'expériences $D$. Il s'agit de l'ensemble d'apprentissage. Par ailleurs, on note $N$ le nombre de mailles de la distribution spatiale.

Selon l'invention, on applique une analyse en composantes principales (ACP) à la pluralité de réalisations de la distribution spatiale de la propriété physique d'intérêt, obtenues pour chacune des combinaisons de valeurs des paramètres incertains. De manière générale, une analyse en composantes principales d'une variable géostatistique consiste à représenter celle-ci dans une base formée des vecteurs propres de son opérateur de covariance. On obtient ainsi une représentation fonctionnelle du champ aléatoire. A partir d'une telle analyse, on peut définir une approximation du champ aléatoire qui représente une part quantifiable de la variance du processus en ne conservant qu'un nombre limité de composantes dans cette représentation.

Avec les notations définies précédemment, la décomposition en composantes principales des distributions spatiales $y(\boldsymbol{D})$ peut s'écrire de la manière suivante :

$$y\big(\boldsymbol{u}, \boldsymbol{\theta}_j\big) = \sum_{k=1}^{M} \alpha_k\big(\boldsymbol{\theta}_j\big)\phi_k(\boldsymbol{u}) \quad (1)$$

où $\phi_k(\boldsymbol{u})$ sont les vecteurs de base, égaux aux vecteurs propres de la matrice de covariance, $\alpha_k(\theta_j)$ sont les coefficients de projection sur cette base, aussi appelés composantes, et M est tel que $M = \min(N, n)$. Dans cette décomposition, il est bien clair que les vecteurs de base sont orthogonaux et triés dans l'ordre décroissant des valeurs propres associées, correspondant à l'ordre décroissant de variance expliquée par ces vecteurs de base (variance des composantes selon chaque vecteur).

De manière avantageuse, on peut ne conserver que les m premières composantes de la base correspondant à un pourcentage minimal donné de la variance totale de la réponse $y$ (en général au moins 95%). Ce pourcentage est égal à la somme normalisée des valeurs propres correspondantes. Cela permet en général de reproduire de façon satisfaisante les distributions spatiales de la propriété physique $y(\boldsymbol{D})$ tout en capturant l'essentiel de la variance de cet ensemble. L'équation (1) peut alors être modifiée de la façon suivante :

$$y\big(\boldsymbol{u}, \boldsymbol{\theta}_j\big) \approx \sum_{k=1}^{m} \alpha_k\big(\boldsymbol{\theta}_j\big)\phi_k(\boldsymbol{u}) \quad (2)$$

Selon l'invention, on construit ensuite un modèle analytique approché de la distribution spatiale de la propriété physique d'intérêt, le modèle analytique approché étant fonction des paramètres incertains. Un modèle analytique approché, aussi appelé méta-modèle ou encore surface de réponse, est un modèle qui approxime la relation entre les paramètres d'entrée de la simulation (en particulier les paramètres incertains) et une sortie de cette simulation ou toute autre variable calculée à partir des sorties de la simulation.

Selon une mise en œuvre de l'invention, le méta-modèle $\hat{y}$ de la propriété physique d'intérêt peut s'écrire, pour n'importe quelle combinaison des paramètres $\theta$ (et pas seulement pour la pluralité de combinaisons de paramètres incertains prédéfinies à l'étape 2) de la manière suivante :

$$\hat{y}(\boldsymbol{u}, \boldsymbol{\theta}) = \sum_{k=1}^{m} \hat{\alpha}_k(\boldsymbol{\theta})\phi_k(\boldsymbol{u}) \quad (3)$$

où $\hat{a}_k(\theta)$ représente le méta-modèle approchant la composante $\alpha_u(\theta)$, construit à partir des valeurs calculées pour cette composante sur l'ensemble d'apprentissage y(D).

Selon une mise en œuvre de l'invention, on peut construire un méta-modèle approchant une variable d'intérêt scalaire au moyen d'une régression polynômiale ("polynomial regression" en anglais), d'une régression par processus gaussiens ("Gaussian process regression" en anglais) ou encore de réseaux de neurones ("neural network" en anglais), ou toute méthode analogue.

Ainsi, au cours de cette étape, on construit un modèle analytique approché de la propriété physique d'intérêt en construisant un modèle analytique approché pour chaque composante principale sélectionnée en fonction d'un seuil portant sur la variance tel que décrit ci-dessus. De manière générale, un modèle analytique approché permet d'approcher un grand nombre de simulations à moindre coût, et donc de pouvoir explorer l'espace des paramètres incertains.

## 5) Amélioration du modèle analytique approché de la distribution spatiale de la propriété physique

Cette étape est itérative, c'est-à-dire qu'elle peut être répétée plusieurs fois, tant qu'au moins un critère d'arrêt n'est pas satisfait. Au cours de cette étape, pour une itération donnée, on cherche à améliorer le modèle analytique approché de la distribution spatiale de la propriété physique d'intérêt en appliquant une méthode de planification séquentielle avec adaptation afin de déterminer au moins une combinaison supplémentaire des valeurs possibles des paramètres incertains. Par "améliorer le modèle analytique approché", on entend améliorer sa précision. Une fois une combinaison supplémentaire déterminée, on applique de nouveau les étapes 3) et 4) décrites ci-dessus à la nouvelle pluralité de combinaisons des valeurs des paramètres incertains, formée par la pluralité de combinaisons de valeurs des paramètres incertains à l'itération précédente et d'au moins une combinaison supplémentaire de valeurs des paramètres incertains déterminée à l'itération courante.

Autrement dit, au cours de cette étape, on évalue si le modèle analytique approché de la distribution spatiale de la propriété physique d'intérêt est satisfaisant, et si tel n'est pas le cas, on rajoute de manière automatique des données supplémentaires à l'ensemble d'apprentissage afin de construire un modèle analytique approché plus précis, tenant compte de données enrichies. Un modèle analytique approché amélioré permet de prédire de manière plus précise la propriété physique d'intérêt.

De manière générale, une méthode de planification séquentielle avec adaptation enrichit un ensemble d'apprentissage donné (et plus spécifiquement l'ensemble des combinaisons de valeurs des paramètres de simulation incertains) en utilisant à la fois la définition de cet ensemble et les informations fournies par le métamodèle construit sur cet ensemble.

Avantageusement, si on utilise une méthode de régression par processus Gaussien pour construire un modèle analytique approché d'une propriété scalaire donnée, on peut utiliser une méthode de planification séquentielle avec adaptation basée sur différents critères, comme par exemple : variance de krigeage maximale (en anglais "Maximum Mean Squared Error" ou MMSE, cf. le document [5]), variance de krigeage maximale pondérée par l'erreur de validation croisée (en anglais "Adjusted variance", cf. le document [6]) ; intégration de la variance de krigeage (en anglais "Integrated Mean Square Error" ou IMSE, cf. le document [7]), ou encore les plans d'expériences adaptatifs hiérarchiques (en anglais "Hierarchical adaptive experimental design", cf. le document [8]).

Selon l'invention, on applique une méthode de planification séquentielle avec adaptation aux modèles analytiques approchés des composantes issues de la décomposition en composantes principales, en commençant par les composantes associées aux plus grandes valeurs propres. Plus précisément, à la première itération, on identifie la composante $\alpha_k$ associée à la plus grande valeur propre dont le méta-modèle $\hat{\alpha}_k$ ne satisfait pas la qualité cible défini par une valeur d'un indicateur de précision. Puis on applique une méthode de planification séquentielle au méta-modèle $\hat{\alpha}_k$ jusqu'à atteindre qualité cible, itération après itération. On passe ensuite à la composante suivante dans une itération supplémentaire, et ainsi de suite jusqu'à atteindre une qualité cible pour tous les méta-modèles des composantes. L'objectif est ici d'améliorer prioritairement la prédiction sur les composantes correspondant aux variances les plus élevées de la réponse.

Selon l'invention, au moins un critère d'arrêt est évalué à chaque itération.

Selon une mise en œuvre de l'invention, on peut prédéfinir un critère d'arrêt relatif à la précision du modèle analytique approché, c'est-à-dire une précision au-delà de laquelle il n'est plus jugé utile d'améliorer le modèle analytique approché.

Selon une variante de cette mise en œuvre de l'invention, on peut définir un indicateur de précision relatif aux modèles analytiques approchés des composantes issues de l'analyse en composantes principales à l'itération courante.

Selon une mise en œuvre de l'invention, on peut déterminer un indicateur de précision, noté *Q2*, relatif à un modèle analytique approché d'une composante de la manière suivante :

$$Q2 = 1 - \frac{\sum_{i=1}^{n}(\alpha(\boldsymbol{\theta}_i) - \hat{\alpha}_{-i}(\boldsymbol{\theta}_i))^2}{\sum_{i=1}^{n}(\alpha(\boldsymbol{\theta}_i) - \bar{\alpha})^2}$$

où $\hat{\alpha}_{-i}$ est le modèle analytique approché obtenu pour $\alpha$ à partir du plan d'expériences $\boldsymbol{D}_{-i} = (\theta_j)_{1 \leq j \neq i \leq n}$, et $\bar{\bar{\alpha}}$ représente la moyenne des valeurs $\alpha(\boldsymbol{D})$. Plus précisément, cette approche consiste à utiliser la technique de validation croisée dite de "leave-one-out" (et connue sous l'acronyme LOO-CV), dans laquelle on considère des méta-modèles complémentaires obtenus en ignorant l'un des points de l'ensemble d'apprentissage, et en calculant l'erreur entre la valeur simulée en ce point et la valeur prédite par le méta-modèle. Les erreurs de prédiction ainsi calculées sont alors regroupées dans un indicateur global. L'indicateur de précision Q2 a une valeur d'autant plus proche de 1 que l'erreur qu'il quantifie est faible.

Selon une autre mise en œuvre de l'invention, pouvant toutefois être cumulée à la mise en œuvre décrite précédemment, on peut aussi estimer un indicateur de précision d'un modèle analytique approché d'une composante à partir d'un plan d'expériences supplémentaire, par exemple noté $\boldsymbol{D_{test}} = (\theta'_j)_{1 \leq j \leq ntest}$, indépendant de l'ensemble d'apprentissage de l'itération courante. On peut alors définir un indicateur de précision, noté R2, de la manière suivante :

$$R2 = 1 - \frac{\sum_{j=1}^{ntest}(\alpha(\boldsymbol{\theta'}_j) - \hat{\alpha}(\boldsymbol{\theta'}_j))^2}{\sum_{j=1}^{ntest}(\alpha(\boldsymbol{\theta'}_j) - \bar{\alpha})^2}$$

où $\hat{\alpha}$ est le méta-modèle obtenu pour $\alpha$ à partir du plan d'expériences $\boldsymbol{D}$ et $\bar{\alpha}$ représente la moyenne des valeurs $\alpha(\boldsymbol{D_{test}})$.

Selon une mise en œuvre de l'invention, on peut en outre définir un critère d'arrêt général du processus itératif, pouvant correspondre à un seuil relatif aux indicateurs de précision Q2 et/ou R2 associés à chacune ou à certaines des composantes. Alternativement ou cumulativement, on peut aussi définir un critère d'arrêt sous la forme d'un seuil relatif à la moyenne, sur toutes les mailles de la distribution spatiale, des indicateurs Q2 et/ou R2, et/ou à leur médiane, à leur valeur maximale ou encore minimale etc. De manière complémentaire, on peut aussi définir un critère d'arrêt basé sur un suivi de l'évolution de tels indicateurs au cours des itérations : par exemple, on peut conclure que l'ajout de combinaisons supplémentaires n'est plus efficace si on observe une stagnation des indicateurs de précision avec les itérations. Enfin, un critère d'arrêt prédéfini peut consister en un nombre maximal d'itérations des étapes 3 à 5 du procédé selon l'invention, ou encore en un nombre maximal de simulations réalisées.

Ces critères visent à assurer l'efficacité du procédé selon l'invention, c'est-à-dire à planifier de manière automatique de nouvelles simulations à réaliser et à éviter dans la mesure du possible des simulations inutiles.

**6) Estimation des incertitudes associées à la distribution spatiale de la propriété physique**

Au cours de cette étape, à partir du modèle analytique approché amélioré obtenu à l'issue de l'application des étapes précédentes, on détermine des incertitudes associées à la distribution spatiale de la propriété physique. Avantageusement, on quantifie des incertitudes associées à la distribution spatiale de la propriété physique au moyen d'une analyse de sensibilité et/ou une analyse de risque.

Selon une mise en œuvre de l'invention, à partir du modèle analytique approché amélioré, on peut réaliser une analyse de sensibilité relative à la distribution spatiale de la propriété physique d'intérêt. De manière générale, une analyse de sensibilité permet d'analyser l'impact de l'incertitude de chaque paramètre sur les réponses du simulateur. Une telle technique est par exemple décrite dans le document [2].

Selon une mise en œuvre de l'invention, à partir du modèle analytique approché amélioré, on peut réaliser une analyse de sensibilité globale basée sur la variance, par exemple selon la méthode des indices de Sobol, décrite par exemple dans le document [12]. Pour cela, on génère un large échantillon de l'espace des paramètres incertains, on estime à l'aide du modèle analytique approché amélioré les réalisations correspondantes de la distribution spatiale de la propriété d'intérêt, et on quantifie dans chaque maille de cette distribution spatiale la part de la variance de la propriété d'intérêt due à la variabilité de chaque paramètre seul (effet principal) ou en interaction avec d'autres paramètres. On obtient ainsi l'influence de chaque paramètre dans chaque maille de la distribution spatiale de la propriété d'intérêt.

Alternativement ou cumulativement, à partir du modèle analytique approché amélioré, on peut réaliser une analyse de risque relative à la distribution spatiale de la propriété physique d'intérêt. On peut par exemple générer un large échantillon des paramètres incertains (de type Monte Carlo) et estimer à l'aide du modèle analytique approché amélioré les réalisations correspondantes de la distribution spatiale de la propriété d'intérêt. Cela fournit dans chaque maille de la distribution spatiale un large échantillon de la propriété d'intérêt que l'on peut analyser. On peut par exemple calculer des percentiles pour cette propriété, ou encore estimer la probabilité que la propriété physique dans cette maille soit dans un intervalle cible donné. On obtient alors une distribution spatiale des percentiles ou des probabilités d'occurrence (voir par exemple le document [2]).

**7) Exploitation des hydrocarbures du bassin**

Cette étape facultative est à mettre en œuvre, à l'issue des étapes précédentes, dans le cas du procédé selon le deuxième aspect de l'invention, qui consiste en un procédé d'exploitation des hydrocarbures d'un bassin sédimentaire.

A l'issue de la mise en œuvre des précédentes étapes, on dispose au moins d'un modèle analytique approché précis d'au moins une propriété physique d'intérêt dans le bassin sédimentaire et d'une estimation des incertitudes associées à au moins cette propriété physique d'intérêt.

Un modèle analytique précis d'au moins une propriété physique d'intérêt est avantageux pour réaliser de manière rapide une estimation du potentiel pétrolier du bassin. Il peut notamment être utilisé pour estimer des probabilités d'occurrence d'évènements en lien avec les propriétés du bassin, caractérisés par la présence conjointe de plusieurs propriétés dans des intervalles cible. Notamment, il peut permettre d'estimer une probabilité de présence des ressources recherchées, comme une accumulation d'hydrocarbures. On peut par exemple estimer une carte de probabilité de présence d'un réservoir définie par la probabilité dans chaque colonne du bassin que l'épaisseur de sédiments déposée et la concentration en sable soient supérieures à un certain seuil. Ces probabilités peuvent être intégrées dans le processus de décision quant au forage de nouveaux puits d'exploration, qui fourniront des données venant enrichir le modèle du bassin. Ainsi, en fonction de telles analyses, on peut identifier un réservoir dans le bassin, et on peut déterminer au moins un schéma d'exploitation des hydrocarbures contenus dans le bassin sédimentaire étudié.

Selon une mise en œuvre de l'invention, à partir au moins des incertitudes associées à la distribution spatiale de la propriété physique, on peut identifier un potentiel réservoir dans le bassin, et on peut déterminer au moins un schéma d'exploitation des hydrocarbures contenus dans le bassin sédimentaire étudié.

De manière générale, un schéma d'exploitation comprend un nombre, une géométrie et une implantation (position et espacement) des puits injecteurs et producteurs à forer dans le bassin. Un schéma d'exploitation peut en outre comprendre un type de récupération assistée des hydrocarbures contenus dans le ou les réservoirs du bassin, telle qu'une récupération assistée au moyen de l'injection d'une solution comprenant un ou des polymères, de la mousse de $CO_2$, etc. Un schéma d'exploitation d'un réservoir d'hydrocarbures d'un bassin doit par exemple permettre un fort taux de récupération des hydrocarbures piégés dans ce réservoir, sur une longue durée d'exploitation, et nécessitant un nombre de puits limité. Autrement dit, le spécialiste prédéfinit des critères d'évaluation selon lesquels un schéma d'exploitation des hydrocarbures d'un bassin sédimentaire est considéré comme suffisamment performant pour être mis en œuvre.

Selon un mode de mise en œuvre de l'invention, on peut définir une pluralité de schémas d'exploitation des hydrocarbures contenus dans un ou des réservoirs géologiques du bassin étudié et on estime, à l'aide d'un simulateur de réservoir (tel que le logiciel PUMA FLOW® (IFP Energies nouvelles, France)), au moins un critère d'évaluation de ces schémas d'exploitation. Ces critères d'évaluation peuvent comprendre la quantité d'hydrocarbures produits pour chacun des différents schémas d'exploitation, la courbe représentative de l'évolution de la production dans le temps au niveau de chacun des puits envisagés, le rapport huile sur gaz (GOR) au niveau de chaque puits envisagé etc. Le schéma selon lequel les hydrocarbures contenus dans le ou les réservoirs du bassin étudié sont réellement exploités peut alors correspondre à celui satisfaisant au moins un des critères d'évaluation des différents schémas d'exploitation. A noter que la définition de la pluralité de schémas d'exploitation à tester peut être elle-même déterminée de manière automatisée, par exemple au moyen du logiciel COUGAR FLOW® (IFP Energies nouvelles, France).

Puis, une fois un schéma d'exploitation déterminé, les hydrocarbures piégés dans le ou les réservoirs pétroliers du bassin sédimentaire étudié sont exploités en fonction de ce schéma d'exploitation, notamment au moins en forant les puits injecteurs et producteurs du schéma d'exploitation ainsi déterminé, et en installant les infrastructures de production nécessaires au développement de ce ou ces réservoirs. Dans le cas où le schéma d'exploitation a en outre été déterminé en estimant la production d'un réservoir associée à différents types de récupération assistée, on injecte dans le puits injecteur le ou les types d'additifs (polymères, tensio-actifs, mousse de $CO_2$) sélectionnés.

Il est bien entendu qu'un schéma d'exploitation des hydrocarbures d'un bassin peut être évolutif sur la durée de l'exploitation des hydrocarbures de ce bassin, en fonction par exemple de connaissances additionnelles relatives au bassin acquises pendant cette exploitation, des améliorations dans les différents domaines techniques intervenant lors d'une exploitation d'un gisement d'hydrocarbures (améliorations dans le domaine du forage, de la récupération assistée par exemple).

Alternativement à la récupération des hydrocarbures, les étapes du procédé peuvent être également mis en œuvre dans le cadre d'un procédé de géothermie, de stockage d'énergie dans le sous-sol, ou de stockage de gaz dans le sous-sol.

Pour ces applications, à l'issue de la mise en œuvre des précédentes étapes, on dispose au moins d'un modèle analytique approché précis d'au moins une propriété physique d'intérêt dans le bassin sédimentaire et d'une estimation des incertitudes associées à au moins cette propriété physique d'intérêt.

Un modèle analytique précis d'au moins une propriété physique d'intérêt est avantageux pour réaliser de manière rapide une estimation du potentiel de géothermie, ou de stockage dans le sous-sol de gaz ou d'énergie (par exemple un gaz comprimé).

**Equipement et produit programme d'ordinateur**

Le procédé selon l'invention est mis en œuvre au moyen d'un équipement (par exemple un poste de travail informatique) comprenant des moyens de traitement des données (un processeur) et des moyens de stockage de données (une mémoire, en particulier un disque dur), ainsi qu'une interface d'entrée et de sortie pour saisir des données et restituer les résultats du procédé.

Les moyens de traitement de données sont configurés pour réaliser en particulier les étapes 2 à 6 décrites ci-dessus.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre du procédé tel que décrit précédemment, lorsque ledit programme est exécuté sur un ordinateur.

**Exemples**

Les caractéristiques et avantages du procédé selon l'invention apparaîtront plus clairement à la lecture de l'exemple d'application ci-après.

Pour cet exemple d'application, on considère un bassin sédimentaire en contexte de marge passive. Cette marge est caractérisée par un apport en sédiments composés de sable et d'argile en un point situé à l'ouest de la marge au moment de sa formation. La simulation numérique selon l'invention est une simulation stratigraphique et la propriété physique d'intérêt est l'épaisseur totale de sédiments déposés dans chaque colonne du modèle stratigraphique.

Les 9 paramètres incertains considérés sont liés aux différents processus intervenant dans la formation du bassin sédimentaire : accommodation, apport en sédiments et transport. On leur associe une loi de distribution uniforme dans un intervalle donné.

On applique ensuite le procédé selon l'invention à l'épaisseur totale de sédiments déposés dans chaque colonne de la représentation maillée. La propriété physique d'intérêt est donc l'épaisseur totale de sédiments déposés dans chaque colonne de la représentation maillée. Plus précisément, pour cet exemple, la distribution spatiale d'intérêt est une carte de taille 1000km X 1000km dans un plan horizontal, discrétisée en un maillage de 100 X 100 cellules. On considère un plan d'expériences initial de type LHS de 20 combinaisons des valeurs possibles des paramètres de simulation incertains auxquelles on ajoute à chaque itération une (cas 1) ou cinq (cas 2) nouvelles combinaisons des valeurs possibles des paramètres de simulation incertains. Les méta-modèles approchant les composantes sont construits par processus Gaussiens, et l'ajout de combinaisons est fait selon la méthode de la variance de krigeage maximale. L'analyse en composantes principales conduit à retenir 4 composantes (notées Comp1, Comp2, Comp3, Comp4) correspondant à 95% de la variance.

Les critères d'arrêt considérés sont :

- valeur de l'indicateur de précision Q2 (tel que défini en section 5) supérieure à 0.95 pour les méta-modèles des composantes ;

- valeur du coefficient R2 (tel que défini en section 5) médian sur la zone d'intérêt pour l'épaisseur totale de sédiments supérieure à 0.95 ;

- deux critères de stagnation au fur et à mesure des itérations pour le coefficient R2 médian sur la zone d'intérêt pour l'épaisseur totale de sédiments ;

On fixe en outre un nombre maximal de simulations à 98.

On répète la mise en œuvre du procédé selon l'invention pour 5 plans d'expériences Exp1, Exp2, Exp3, Exp4, Exp5 initiaux différents. La qualité des prédictions est estimée à l'aide d'un ensemble indépendant de 50 points.

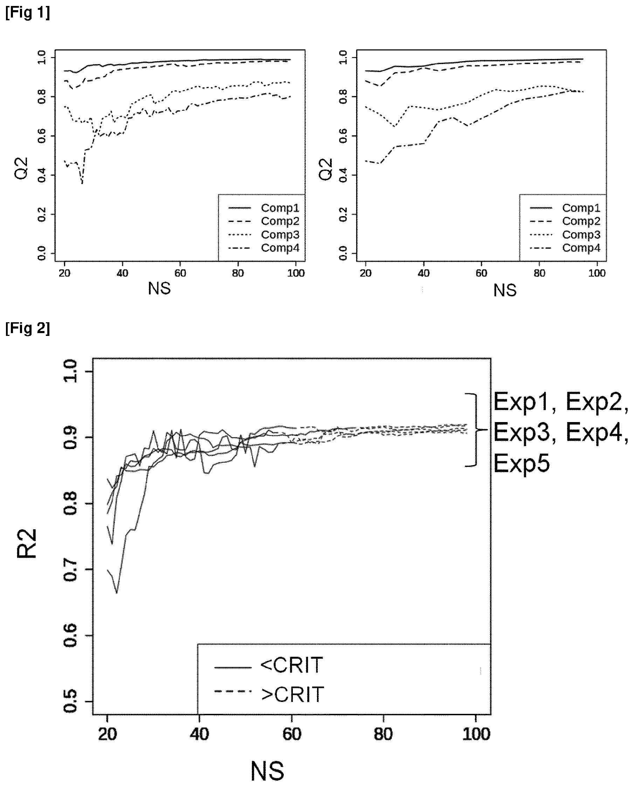

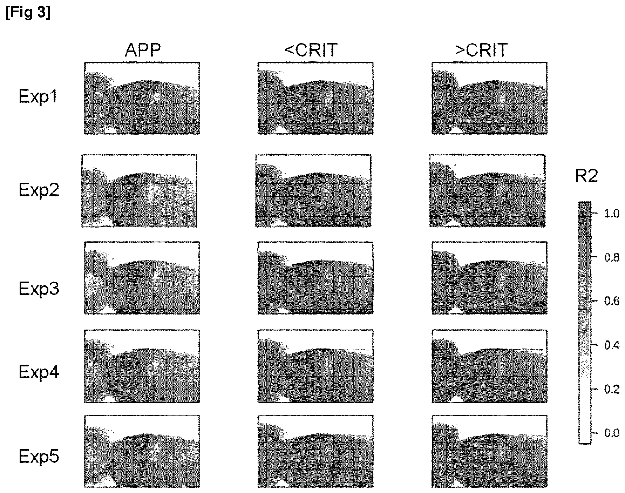

La figure 1 illustre l'évolution de l'indicateur de précision Q2 pour les 4 composantes Comp1, Comp2, Comp3, Comp4 en fonction du nombre de simulations NS, dans le cas 1 (figure de gauche) et dans le cas 2 (figure de droite) et pour le premier plan d'expériences Exp1. La figure 2 illustre l'évolution de l'indicateur de précision R2 médian sur la distribution spatiale de l'épaisseur totale de sédiments pour les 5 plans d'expériences différents Exp1, Exp2, Exp3, Exp4, et Exp5, avec ajout de 1 combinaison par itération (cas 1), l'un au moins des critères d'arrêt portant sur cet indicateur étant satisfait après environ 58 simulations (cf. la délimitation entre les portions de courbes "<CRIT" et ">CRIT"). La figure 3 illustre la distribution des valeurs de l'indicateur de précision R2 pour l'épaisseur totale de sédiments dans chaque maille (au total 100x100 mailles) de la distribution spatiale considérée pour les 5 plans d'expériences Exp1, Exp2, Exp3, Exp4, Exp5 avec ajout de 1 point par itération (cas 1), pour l'ensemble d'apprentissage (colonne "APP" à gauche), jusqu'à satisfaire au moins un des critères d'arrêt prédéfinis (colonne "<CRIT" du milieu), et en poursuivant les itérations jusqu'à atteindre 98 simulations (colonne ">CRIT" à droite).

On peut observer sur la figure 1 que le procédé d'ajouts de points itératifs selon l'invention permet globalement d'augmenter la qualité de la prédiction des modèles analytiques approchés pour les différentes composantes. De plus, on peut observer que le fait d'ajouter 5 points simultanément lors d'une itération ne dégrade pas les résultats. On peut par ailleurs observer sur la figure 2 que cette amélioration s'accompagne également d'une augmentation globale de l'indicateur R2 médian. Enfin, on peut observer sur la figure 3 que les critères d'arrêt relatifs aux indicateurs de précision (critères 2 et 3 ci-dessus) sont satisfaisants. En effet, la valeur du coefficient R2 dans les mailles est globalement satisfaisante une fois l'un de ces critères atteint, et n'augmente que très peu si l'on poursuit les itérations.

## Revendications

1. Procédé pour déterminer des incertitudes relatives à au moins une propriété physique d'un bassin sédimentaire, au moyen d'une simulation numérique exécutée à partir de paramètres de simulation, ladite simulation numérique étant une simulation stratigraphique ou une simulation de bassin exécutée sur ordinateur, ladite propriété physique du bassin étant choisie parmi l'épaisseur d'une unité stratigraphique, la concentration en sable, la concentration en argile dans une unité stratigraphique, la température, la pression, la porosité, la masse volumique, la saturation, ou la concentration de la roche en matière organique, ladite simulation stratigraphique simulant l'évolution d'un bassin sédimentaire au cours des temps géologiques afin de quantifier notamment la géométrie des couches sédimentaires, le type de sédiments déposés, la profondeur d'eau au moment du dépôt, et ladite simulation de bassin simulant au cours des temps géologiques, la formation des hydrocarbures à partir notamment de la matière organique initialement enfouie avec les sédiments, et le transport de ces hydrocarbures depuis les roches dans lesquelles ils se sont formés jusqu'à celles où ils sont piégés, dans lequel on réalise au moins les étapes suivantes :

   A) On réalise des mesures de grandeurs physiques relatives audit bassin au moyen de capteurs, et on détermine au moins des valeurs desdits paramètres de simulation, lesdits paramètres de simulation étant choisis parmi la bathymétrie initiale, les apports en sédiments, leur transport pour chaque pas de temps, des propriétés pétrophysiques associées au bassin étudié ;

   B) On sélectionne des paramètres de simulation incertains, et on définit une pluralité de combinaisons des valeurs possibles desdits paramètres de simulation incertains ;

   C) On détermine une pluralité de représentations maillées dudit bassin au moyen de ladite simulation numérique, chacune desdites représentations maillées étant obtenues pour une desdites combinaisons de ladite pluralité de combinaisons des valeurs possibles desdits paramètres incertains, chacune des mailles d'une desdites représentations maillées comprenant au moins une valeur permettant de déterminer ladite propriété ;

et en ce que, pour au moins une desdites propriétés physiques dudit bassin sédimentaire, on réalise au moins les étapes suivantes :

D) Pour chacune desdites représentations maillées, on détermine une réalisation d'une distribution spatiale de ladite propriété, on applique une analyse en composantes principales à la pluralité de réalisations de ladite distribution spatiale de ladite propriété, on sélectionne lesdites composantes dont la somme des valeurs propres associées est supérieure à un seuil prédéfini, et on détermine un modèle analytique approché de ladite distribution spatiale de ladite propriété en construisant un modèle analytique approché pour chacune desdites composantes sélectionnées ;

E) Tant qu'un critère d'arrêt n'est pas satisfait, on améliore la précision dudit modèle analytique approché de ladite distribution spatiale de ladite propriété de manière itérative en déterminant, à chaque itération, au moins une combinaison supplémentaire de ladite pluralité de combinaisons des valeurs possibles desdits paramètres incertains au moyen d'une méthode de planification séquentielle avec adaptation, ladite méthode de planification séquentielle avec adaptation étant appliquée auxdits modèles analytiques approchés desdites composantes sélectionnées, en considérant les composantes dans l'ordre décroissant de leurs valeurs propres et jusqu'à atteindre une valeur d'un indicateur de précision relatif à au moins ladite composante considérée à l'itération courante, et en répétant les étapes C) et D) ;

et en ce que, à partir dudit modèle analytique approché amélioré de ladite distribution spatiale de ladite au moins une propriété physique amélioré, on détermine lesdites incertitudes relatives à au moins ladite distribution spatiale de ladite propriété dudit modèle de bassin sédimentaire.

2. Procédé selon la revendication 1, dans lequel ledit au moins un critère d'arrêt est fonction d'au moins un indicateur de précision sur lesdits modèles analytiques approchés desdites composantes.

3. Procédé selon l'une des revendications précédentes, dans lequel on détermine un modèle analytique approché au moyen d'une régression par processus Gaussien.

4. Procédé selon l'une des revendications précédentes, dans lequel ladite méthode de planification séquentielle avec adaptation est choisie parmi la liste suivante : une méthode d'estimation de la variance de krigeage maximale, une méthode d'estimation de la variance de krigeage maximale pondérée par l'erreur de validation croisée, une méthode par intégration de la variance de krigeage, ou des plans d'expériences hiérarchiques.

5. Procédé selon l'une des revendications précédentes, dans lequel, dans le cas d'une pluralité de propriétés physiques dudit bassin, on applique les étapes C) à E) pour chacune desdites propriétés physiques dudit bassin.

6. Produit programme d'ordinateur téléchargeable depuis un réseau de communication et/ou enregistré sur un support lisible par ordinateur et/ou exécutable par un processeur, comprenant des instructions de code de programme pour la mise en œuvre du procédé selon l'une des revendications précédentes, lorsque ledit programme est exécuté sur un ordinateur.

7. Procédé pour exploiter des hydrocarbures présents dans un bassin sédimentaire, ledit procédé comprenant au moins la mise en œuvre du procédé pour déterminer des incertitudes relatives à au moins une propriété physique d'un bassin sédimentaire selon l'une des revendications 1 à 5, et dans lequel, à partir au moins dudit modèle analytique approché amélioré et/ou desdites incertitudes relatives à au moins ladite propriété physique, on détermine un schéma d'exploitation dudit bassin comprenant au moins une implantation d'au moins un puits injecteur et/ou d'au moins un puits producteur, et on exploite lesdits hydrocarbures dudit bassin au moins en forant lesdits puits de ladite implantation et en les équipant d'infrastructures d'exploitation.

**Patentansprüche**

1. Verfahren zum Bestimmen der Unsicherheiten bezüglich mindestens einer physikalischen Eigenschaft eines Sedimentbeckens mittels einer numerischen Simulation, die ausgehend von Simulationsparametern ausgeführt wird, wobei die numerische Simulation eine stratigraphische Simulation oder eine Beckensimulation ist, die auf einem Computer ausgeführt wird, wobei die physikalische Eigenschaft des Beckens aus der Dicke einer stratigraphischen Einheit, der Sandkonzentration, der Lehmkonzentration in einer stratigraphischen Einheit, der Temperatur, dem Druck, der Porosität, der Dichte, der Sättigung oder der Konzentration des Gesteins an organischem Material gewählt wird, wobei die stratigraphische Simulation die Entwicklung eines Sedimentbeckens im Laufe der geologischen Zeiten simuliert, um insbesondere die Geometrie der Sedimentschichten, den Typ der abgelagerten Sedimente, die Wassertiefe zum Zeitpunkt der Ablagerung zu quantifizieren, und wobei die Beckensimulation im Laufe der geologischen Zeiten die Bildung der Kohlenwasserstoffe ausgehend insbesondere von ursprünglich mit den Sedimenten vergrabener organischer Materie und den Transport dieser Kohlenwasserstoffen von den Gesteinen aus, in denen sie sich gebildet haben, bis zu denen, in denen sie gefangen sind, simuliert, wobei mindestens die folgenden Schritte ausgeführt werden:

A) es werden Messungen physikalischer Größen bezüglich des Beckens mittels Sensoren ausgeführt und es werden mindestens Werte der Simulationsparameter bestimmt, wobei die Simulationsparameter aus der ursprünglichen Bathymetrie, den Einträgen an Sedimenten, ihrem Transport für jeden Zeitschritt, petrophysikalischen Eigenschaften, die dem untersuchten Becken zugeordnet sind, gewählt werden;

B) es werden unsichere Simulationsparameter ausgewählt und es wird eine Mehrzahl von Kombinationen der möglichen Werte der unsicheren Simulationsparameter definiert;

C) es wird eine Mehrzahl von Netzdarstellungen des Beckens mittels der numerischen Simulation bestimmt, wobei jede der Netzdarstellungen für eine der Kombinationen der Mehrzahl von Kombinationen der möglichen Werte der unsicheren Parameter erhalten wird, wobei jede der Maschen einer der Netzdarstellungen mindestens einen Wert umfasst, der es ermöglicht, die Eigenschaft zu bestimmen;

und wobei für mindestens eine der physikalischen Eigenschaften des Sedimentbeckens mindestens die folgenden Schritte ausgeführt werden:

D) für jede der Netzdarstellungen wird eine Ausführung einer räumlichen Verteilung der Eigenschaft bestimmt, wird eine Hauptkomponentenanalyse auf die Mehrzahl von AUsführungen der räumlichen Verteilung der Eigenschaft angewandt, werden die Komponenten ausgewählt, deren Summe der zugeordneten eigenen Werte größer als ein vorgegebener Schwellenwert ist und wird ein approximiertes analytisches Modell der räumlichen Verteilung der Eigenschaft bestimmt, indem ein approximiertes analytisches Modell für jede der ausgewählten Komponenten aufgebaut wird;

E) solange kein Stoppkriterium erfüllt ist, wird die Genauigkeit des approximierten analytischen Modells der räumlichen Verteilung der Eigenschaft iterativ verbessert, indem bei jeder Iteration mindestens eine zusätzliche Kombination der Mehrzahl von Kombinationen der möglichen Werte der unsicheren Parameter mittels einer Methode zur sequenziellen Planung mit Anpassung bestimmt wird, wobei die Methode zur sequenziellen Planung mit Anpassung auf die approximierten analytischen Modelle der ausgewählten Komponenten angewandt wird, wobei die Komponenten in der absteigenden Reihenfolge ihrer Eigenwerte betrachtet werden, und bis ein Wert eines Genauigkeitsindikators bezüglich mindestens der bei der aktuellen Iteration betrachteten Komponente erreicht wird, und wobei die Schritte C) und D) wiederholt werden;

und wobei, ausgehend von dem verbesserten approximierten analytischen Modell der räumlichen Verteilung der mindestens einen verbesserten physikalischen Eigenschaft die Unsicherheiten bezüglich mindestens der räumlichen Verteilung der Eigenschaft des Sedimentbeckenmodells bestimmt werden.

2. Verfahren nach Anspruch 1, wobei das mindestens eine Stoppkriterium eine Funktion mindestens eines Genauigkeitsindikators in den approximierten analytischen Modellen der Komponenten ist.

3. Verfahren nach einem der vorhergehenden Ansprüche, wobei ein approximiertes analytisches Modell mittels einer Gaußprozess-Regression bestimmt wird.

4. Verfahren nach einem der vorhergehenden Ansprüche, wobei die Methode zur sequenziellen Planung mit Anpassung aus der folgenden Liste gewählt ist: eine Methode zur Schätzung der maximalen Kriging-Varianz, eine Methode zur Schätzung der durch den Kreuzvalidierungsfehler gewichteten maximalen Kriging-Varianz, eine Methode durch Integration der Kriging-Varianz oder hierarchische Versuchspläne.

5. Verfahren nach einem der vorhergehenden Ansprüche, wobei im Fall einer Mehrzahl von physikalischen Eigenschaften des Beckens die Schritte C) bis E) bei jeder der physikalischen Eigenschaften des Beckens angewandt werden.

6. Computerprogrammprodukt, das aus einem Kommunikationsnetzwerk heruntergeladen werden kann und/oder auf einem computerlesbaren Medium gespeichert ist und/oder von einem Prozessor ausführbar ist, umfassend Programmcodeanweisungen, die bei der Ausführung des Programms auf einem Computer das Verfahren nach einem der vorhergehenden Ansprüche durchführen.

7. Verfahren zum Abbauen von Kohlenwasserstoffen, die in einem Sedimentbecken vorhanden sind, wobei das Verfahren mindestens die Durchführung des Verfahrens zum Bestimmen der Unsicherheiten bezüglich mindestens einer physikalischen Eigenschaft eines Sedimentbeckens nach einem der Ansprüche 1 bis 5 umfasst und wobei ausgehend mindestens von dem verbesserten approximierten analytischen Modell und/oder von den Unsicherheiten bezüglich mindestens der physikalischen Eigenschaft ein Abbauplan für das Becken bestimmt wird, der mindestens ein Layout mindestens einer Injektionsbohrung und/oder mindestens einer Produktionsbohrung beinhaltet, und die Kohlenwasserstoffe des Beckens mindestens durch das Bohren der Bohrungen des Layouts und deren Ausrüstung mit Abbauinfrastruktur abgebaut werden.

**Claims**

1. Method for determining uncertainties relating to at least one physical property of a sedimentary basin, by means of a numerical simulation executed based on simulation parameters, said numerical simulation being a computer-executed stratigraphic simulation or basin simulation, said physical property of the basin being selected from the thickness of a stratigraphic unit, sand concentration, clay concentration in a stratigraphic unit, temperature, pressure, porosity, density, saturation, and concentration of the rock in respect of organic matter, said stratigraphic simulation simulating the evolution of a sedimentary basin over geological time in order in particular to quantify the geometry of the sedimentary layers, the type of sediments deposited, and the water depth at the time of deposition, and said basin simulation simulating, over geological time, the formation of hydrocarbons in particular from organic matter initially buried with the sediments, and the transport of these hydrocarbons from the rocks in which they were formed to those in which they are trapped, wherein at least the following steps are carried out:

   A) measurements of physical quantities relating to said basin are carried out by means of sensors, and at least values of said simulation parameters are determined, said simulation parameters being selected from the initial bathymetry, the inflows of sediments, their transport for each time increment and petrophysical properties associated with the studied basin;
   B) uncertain simulation parameters are selected, and a plurality of combinations of possible values of said uncertain simulation parameters are defined;
   C) a plurality of mesh representations of said basin are determined by means of said numerical simulation, each of said mesh representations being obtained for one of said combinations of said plurality of combinations of possible values of said uncertain parameters, each of the mesh cells of one of said mesh representations having at least one value allowing said property to be determined;

and wherein, for at least one of said physical properties of said sedimentary basin, at least the following steps are carried out:

   D) for each of said mesh representations, a realization of a spatial distribution of said property is determined, a principal component analysis is applied to the plurality of realizations of said spatial distribution of said property, said components the sum of the associated eigenvalues of which is greater than a predefined threshold are selected, and an approximate analytical model of said spatial distribution of said property is determined by constructing an approximate analytical model for each of said selected components;
   E) as long as a stop criterion is not met, the accuracy of said approximate analytical model of said spatial distribution of said property is improved iteratively by determining, in each iteration, at least one additional combination of said plurality of combinations of possible values of said uncertain parameters by means of an adaptive sequential planning method, said adaptive sequential planning method being applied to said approximate analytical models of said selected components, the components being considered in descending order of their eigenvalues until a value of an accuracy indicator relating at least to said component considered in the current iteration is reached, steps C) and D) being repeated;

and wherein, based on said improved approximate analytical model of said spatial distribution of said at least one physical property, said uncertainties relating to at least said spatial distribution of said property of said sedimentary basin model are determined.

2. Method according to Claim 1, wherein said at least one stop criterion is dependent on at least one indicator of the accuracy on said approximate analytical models of said components.

3. Method according to either of the preceding claims, wherein an approximate analytical model is determined by means of a Gaussian process regression.

4. Method according to any of the preceding claims, wherein said adaptive sequential planning method is selected from the following list: a method for estimating MMSE (MMSE standing for Maximum Mean Squared Error), a method for estimating adjusted variance, an IMSE-based method (IMSE standing for Integrated Mean Square Error), and hierarchical experimental design.

5. Method according to any of the preceding claims, wherein, in the case of a plurality of physical properties of said basin, steps C) to E) are applied for each of said physical properties of said basin.

6. Computer program product that is downloadable from a communication network and/or recorded on a medium that is readable by computer and/or executable by a processor, comprising program code instructions for implementing the method according to any of the preceding claims, when said program is executed on a computer.

7. Method for extracting hydrocarbons present in a sedimentary basin, said method comprising at least implementing the method for determining uncertainties relating to at least one physical property of a sedimentary basin according to any of Claims 1 to 5, and wherein, on the basis at least of said improved approximate analytical model and/or said uncertainties relating to at least said physical property, an extraction scheme is determined for said basin, said extraction scheme comprising at least a placement of at least one injection well and/or at least one production well, and said hydrocarbons of said basin are extracted at least by drilling said wells of said placement and equipping them with extraction infrastructures.

[Fig 1]

[Fig 2]

[Fig 3]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2930350 A1

- US 20090265152 A1

**Littérature non-brevet citée dans la description**

- **DOUARCHE, F** ; **DA VEIGA, S** ; **FERAILLE, M** ; **ENCHÉRY, G** ; **TOUZANI, S.** ; **BARSALOU, R.** Sensitivity Analysis and Optimization of Surfactant-Polymer Flooding under Uncertainties: Oil & Gas Science and Technology - Rev. *IFP Energies nouvelles*, 2014, vol. 69 (4), 603-617
- **GERVAIS, V** ; **DUCROS, M.** ; **GRANJEON, D.** Probability maps of reservoir presence and sensitivity analysis in stratigraphic forward modeling. *AAPG Bulletin*, 2018, vol. 102 (4)
- **DUCROS, M.** ; **NADER F.** Map-based uncertainty analysis for exploration using basin modeling and machine learning techniques applied to the Levant Basin petroleum systems, Eastern Mediterranean.. *Marine and Petroleum Geology*, 2020, 120
- **JIN, R** ; **CHEN, W** ; **SUDJIANTO, A.** On sequential sampling for global metamodeling in engineering design.. *Proceedings of DETC'02, ASME 2002 Design Engineering Technical Conference and Computers and Information in Engineering Conference*, 2002
- **SACKS, J.** ; **WELCH, W.J** ; **MITCHELL, T.J** ; **WYNN, H.P.** Design and Analysis of Computer Experiments. *Stat. Sci.*, 1989, vol. 4 (4), 409-423
- **LE GRATIET, L** ; **CANNAMELA, C.** Cokriging-based sequential design strategies using fast cross-validation techniques for multi-fidelity computer codes. *Technometrics*, 2015, vol. 57 (3), 418-427

- **PICHENY, V** ; **GINSBOURGER, D** ; **ROUSTANT, O.** ; **HAFTKA, R.** ; **KIM N-H**. Adaptive designs of experiments for accurate approximation of a target region. *Journal of Mechanical Design*, 2010, vol. 132 (7), 071008-1, 071008-9
- **BUSBY, D.** Hierarchical adaptive experimental design for Gaussian process emulators.. *Reliability Engineering and System Safety*, 2009, vol. 94, 1183-1193
- Concepts and applications of a 3-D multiple lithology, diffusive model in stratigraphic modeling. **GRANJEON, D.** ; **P. JOSEPH**. Numerical Experiments in Stratigraphy: recent advances in stratigraphic and sedimentologic computer simulations. SEPM Special Publication, 1999, vol. 62, 197-210
- **SCHEICHL R** ; **MASSON R** ; **WENDEBOURG J**. Decoupling and Block Preconditioning for Sedimentary Basin Simulations. *Computational Geosciences*, 2003, vol. 7 (4), 295-318
- **STECKLER, M.S.** ; **WATTS, A.B**. Subsidence of the Atlantic Type Continental Margin off New York.. *Earth and Planetary Science Letters*, 1978, vol. 41, 1-13
- **SOBOL', I. M.** On sensitivity estimation for nonlinear mathematical models. *Mathematical Modeling & Computational Experiment*, 1990, vol. 1 (4), 407-414